# EUROPÄISCHE PATENTSCHRIFT

(11) **EP 1 415 548 B1**
(45) Veröffentlichungstag und Bekanntmachung des Hinweises auf die Patenterteilung: **20.06.2007**
(21) Anmeldenummer: 02024220.2
(22) Anmeldetag: 31.10.2002
(51) Int. Cl.: A23L 2/00, A23L 1/054, A23L 1/05

(54) **Zweiphasengetränk**
Two-phase beverage
Boisson avec deux phases

(43) Veröffentlichungstag der Anmeldung: 06.05.2004
(73) Patentinhaber: Döhler GmbH, D-64295 Darmstadt (DE)
(72) Erfinder: Hechler, Thomas, 64295 Darmstadt (DE); Heckemann, Günter, 64295 Darmstadt (DE); Ingenpasse, Paul, 23611 Bad Schwartau (DE)
(74) Vertreter: Meyers, Hans-Wilhelm

(56) Entgegenhaltungen:
- FR-A- 2 655 241

## Beschreibung

Gegenstand der Erfindung ist ein Zwei-Phasen-Getränk mit einer oberen und einer unteren Phase, wobei die untere Phase mindestens ein Beschwerungsmittel enthält, eine der Phasen Xanthan enthält, die andere Phase mindestens ein weiteres Hydrokolloid enthält und die untere Phase eine mindestens 0,02 kg/dm³ höhere Dichte als die obere Phase aufweist, sowie ein Verfahren zu seiner Herstellung.

Der Mensch ist bestrebt, Speisen und Getränke so anzurichten und bereitzustellen, dass der Genuss dieser mit neuen, verfeinerten Geschmackserlebnissen einhergeht. Von großer Bedeutung ist auch der optische Eindruck der Speisen, was zum Beispiel in der deutschen Redensart "Das Auge isst mit" zum Ausdruck kommt. Auf dem Gebiet der Getränke zeigt sich dies an der Farbenfülle verschiedener Cocktails und Softdrinks, die wahrscheinlich alle bekannten Farbnuancen einschließt, und an der Bedeutung, die der Herrichtung des Getränkes für den Konsumenten zukommt: So werden Cocktails gerne mit Obstscheiben (Ananas, Orange, Kiwi etc.), Tee mit einer Zitronenscheibe oder Cappucino mit Sahne optisch gefällig hergerichtet. Die Beigaben erfüllen jeweils eine Doppelfunktion, indem sie die jeweiligen Getränke sowohl geschmacklich als auch optisch ansprechender machen, insgesamt also als technische Merkmale ästhetische Attribute darstellen.

Das Dokument FR 2655241 beschreibt zum Beispiel ein gel-artiges Lebensmittel, welches aus mind. 2 verschiedenen Komponenten besteht.

Der Erfindung liegt das Problem zugrunde, Getränke bereitzustellen, die dem Konsumenten neuartige Geschmackserlebnisse in Verbindung mit einem ansprechenden Erscheinungsbild bieten.

Überraschenderweise wird das der Erfindung zugrunde liegende Problem gelöst durch ein Zwei-Phasen-Getränk mit einer oberen und einer unteren Phase, wobei
■ die untere Phase mindestens ein Beschwerungsmittel enthält,
■ eine der Phasen Xanthan enthält
■ die andere Phase mindestens ein weiteres Hydrokolloid enthält und
■ die untere Phase eine mindestens 0,02 kg/dm³ höhere Dichte als die obere Phase aufweist.

In einer bevorzugten Ausführungsform ist das Xanthan in der oberen Phase enthalten und das weitere Hydrokolloid in der unteren Phase enthalten. Die obere Phase kann dabei zusätzlich Carboxy-Methyl-Cellulose (CMC) enthalten.

Das weitere Hydrokolloid ist in bevorzugten Ausführungsformen Carboxy-Methyl-Cellulose und/oder Locust Bean Gum (Johannesbrotkernmehl).

In bevorzugten Ausführungsformen ist das Beschwerungsmittel ausgewählt aus der Gruppe bestehend aus Glucosesirup, Maltodextrin, Saccharose, Dextrose, Fruktose und/oder lösliche Ballaststoffe. Das Beschwerungsmittel dient zur Einstellung der Dichte.

Vorzugsweise ist der Anteil des Beschwerungsmittels an der unteren Phase 10-50 Gew.-%, insbesondere 20 bis 40 Gew.-%. Der Anteil des Xanthans an der Xanthan-haltigen Phase ist vorzugsweise 0,01 bis 0,12 Gew.-%, insbesondere 0,02 bis 0,06 Gew.-%. Der Anteil des weiteren Hydrokolloids oder der weiteren Hydrokolloide an der nicht Xanthan-haltigen Phase ist vorzugsweise 0,1 bis 2%, insbesondere 0,2 bis 0,8%.

Das Zwei-Phasen-Getränk enthält in weiteren Ausführungsformen der Erfindung in der unteren und/oder oberen Phase Zusatzstoffe. Vorzugsweise sind als Zusatzstoffe Pektin, Tri-Natrium-Citrat, Grundstoffe, Geschmacksstoffe, Aromastoffe, Farbstoffe, Fruchtzubereitung, Emulgatoren, fetthaltige Substanzen, Milchprodukte, Milch, Joghurt, Molke und/oder Buttermilch enthalten. Die fetthaltigen Substanz sind vorzugsweise Sahne und/oder tierische oder pflanzliche Fette.

Die Zusatzstoffe, insbesondere die Farbstoffe, werden in einer bevorzugten Ausführungsform so ausgewählt, das sie als Bestandteil der oberen Phase eher lipophil, als Bestandteil der unteren Phase eher hydrophil sind. Dadurch wird die Löslichkeit in der jeweiligen Phase verbessert, aber auch die Trennung der Phasen unterstützt. In solchen Ausführungsformen sind zum Beispiel fetthaltige Substanzen in der oberen Phase enthalten.

Da der Konsument beim Trinken des erfindungsgemäßen 2-Phasen-Getränks gleichzeitig zwei Phasen aufnimmt, ermöglicht das erfindungsgemäße 2-Phasen-Getränk neuartige Geschmackserlebnisse. Vorteilhafterweise enthält jede der beiden Phasen geschmackliche Komponenten, deren Kombination den Konsumenten anspricht. In bevorzugten Ausführungsformen werden die Kombinationen Banane/Kirsch, Schokolade/Banane, Kaffee/Sahne, Ananas/Kokos, Weiße Schokolade/Vollmilchschokolade verwendet. Es empfiehlt sich nicht, zwei Geschmackskomponenten zu verwenden, die im Zusammenwirken oder im Übergangsbereich unangenehme Empfindungen hervorrufen. Solche Kombinationen sind dem Fachmann an sich bekannt. Das erfindungsgemäße 2-Phasen Getränk weist darüber hinaus ein optisch ansprechendes Erscheinungsbild auf, insbesondere wenn die beiden Phasen unterschiedliche Farben aufweisen. Der Konsument wird durch die klare Trennung der beiden verschiedenfarbigen Phasen optisch angesprochen und in Erstaunen versetzt, weil das Getränk auch nach Schütteln oder längerem Aufbewahren stabil ist und keine wesentliche Phasenmischung eintritt. Damit unterscheidet sich das erfindungsgemäße 2-Phasengetränk deutlich von Cocktails wie dem "Tequila Sunrise". Solche Cocktails werden durch Überschichtung eines flüssigen Bestandteils mit einem anderen, verschiedenfarbigen flüssigen Bestandteil hergestellt und sofort serviert. Die beiden Bestandteile sind nicht durch eine klare Phasengrenze getrennt und vermischen sich nach einiger Zeit oder nach kurzem Mischen vollständig.

Die CMC kann neben seiner Funktion als Hydrokolloid auch zur Viskositätserhöhung beitragen. Vorzugsweise wird der Anteil an CMC in Abhängigkeit von den eingesetzten Rohstoffen (z. B. Püreeabteil) im Grundstoff eingestellt.

Insbesondere ist bei dem erfindungsgemäßen Getränk überraschend, dass in den jeweiligen Phasen gelösten Zusatzstoffe, wie Aromastoffe und Farbstoffe, und sonstige Komponenten, über längere Zeiträume im wesentlichen in ihren Phasen verbleiben und selbst nach Schütteln im wesentlichen nicht in die andere Phase übertreten.

Typischerweise findet nach Vermischung der Phasen anhand des unten beschriebenen Schütteltests bei 200 U/min nach Beendigung des Schüttelns eine deutlich erkennbare Entmischung der Phasen in weniger als 10 Minuten, insbesondere weniger als 4, oder weniger als 2 Minuten statt. Dies bedeutet, dass sich die beiden Phasen nach dieser Zeit im Wesentlichen separiert haben. Die Phasentrennung bleibt außerdem über lange Zeiträume, vorzugsweise mindestens 2, 5 oder 10 Wochen im wesentlichen aufrechterhalten und wird vorzugsweise durch Transport und/oder Lagerung im wesentlichen nicht beeinträchtigt.

Um eine Vermischung der beiden Phasen ineinander bei diesem System zu verhindern, sind folgende Faktoren von besonderer Bedeutung:
Dichteunterschied: Die obere Phase weist eine um mindestens 0,02 kg/dm³ geringere Dichte als die untere Phase.
Stabilisatoren: Der Zusatz von Hydrokolloiden als Stabilisatoren ist erforderlich, um die klare Trennung der beiden Phasen zu unterstützen. Die Stabilisatoren dienen zum Beispiel in beiden Phasen zur Erhöhung der Viskosität, um somit ein Vermischen der beiden Phasen zu erschweren.

Diese Faktoren werden so aufeinander abgestimmt, dass eine klare Phasentrennung erzielt wird.

Die erfindungsgemäßen 2-Phasen-Getränke sind allgemein herstellbar mit Hilfe von Verfahren, bei denen die beiden Phasen getrennt voneinander hergestellt werden und nacheinander so in die Flasche oder ein entsprechendes Behältnis eingeführt werden, dass eine irreversible Vermischung nicht auftritt.

Gegenstand der Erfindung ist insbesondere ein Verfahren zur Herstellung eines Zwei-Phasen-Getränks, wobei
■ eine obere Phase und eine untere Phase getrennt voneinander gemischt werden,
■ gegebenenfalls homogenisiert werden,
■ zuerst die untere Phase eingefüllt wird und dann die obere Phase über den Flaschenrand zudosiert wird oder
■ zuerst die obere Phase eingefüllt wird und dann die untere Phase mittels eines Füllorgans untergelegt wird.

Die Überschichtung der unteren Phase mit der oberen erfolgt zum Beispiel mit einem Trichter mit Füllkopf, an dessen Ausgang eine Vorrichtung, die die obere Phase der Flaschenwand zuleitet, z. B. ein Prallblech, angeordnet ist. Alternativ zum Prallblech kann erfindungsgemäß auch jede entsprechende Ausführungsform gewählt werden, durch die Flüssigkeit vorteilhafterweise schonend der Gefäßwand zugeführt wird.

Gegenstand der Erfindung ist auch die Verwendung einer unteren Phase und einer oberen Phase, wobei
■ die untere Phase ein Beschwerungsmittel enthält,
■ eine der Phasen Xanthan enthält
■ die andere Phase ein weiteres Hydrokolloid enthält und
■ die untere Phase eine mindestens 0,02 kg/dm³ höhere Dichte als die obere Phase aufweist
zur Herstellung eines erfindungsgemäßen Zwei-Phasen-Getränks.

### Ausführungsbeispiele:

Es wurde ein erfindungsgemäßes 2-Phasen-Getränk nach der folgenden Standardrezeptur hergestellt:

| Untere Phase: | | | |
|---|---|---|---|
| Rohstoff | Anteil %¹⁾ | Brix²⁾ | Dichte g/ml |
| Grundstoff ³⁾ | 20,00 | 33,0 | 1,144 |
| Glucosesirup | 15,00 | 80,0 | 1,414 |
| Maltodextrin | 15,00 | 100,0 | 1,554 |
| Tri-Natrium-Citrat | 0,05 | 100,0 | 1,554 |
| Xanthan | 0,04 | 100,0 | 1,554 |
| Wasser | 49,95 | 0,0 | 1,000 |
| Gesamt | 100,00 | ⌀ 33,7 | ⌀ 1,147 |

| obere Phase: | | | |
|---|---|---|---|
| Rohstoff | Dosage %¹) | Brix²) | Dichte g/ml |
| Grundstoff ³⁾ | 20,00 | 33,0 | 1,144 |
| Saccharose krist. | 3,00 | 100,0 | 1,554 |
| Locust Bean Gum | 0,05 | 100,0 | 1,554 |
| Carboxymethylcellulose | 0,35 | 100,0 | 1,554 |
| Tri-Natrium-Citrat | 0,05 | 100,0 | 1,554 |
| Sahne 30% Fett | 20,00 | 39,0 | 0,980 |
| Wasser | 56,55 | 0,0 | 1,000 |
| Gesamt | 100,00 | ⌀17,8 | ⌀1,074 |

| | | | |
|---|---|---|---|
| 1) Gewichtsprozent | | | |
| 2) Brix ist der mittels eines Refraktometers gemessene Brechungsindex bei 20 °C. Für reine Saccharoselösungen entspricht Brix = Prozent Trockensubstanzgehalt (% TS-Gehalt) | | | |
| 3) Grundstoff, bestehend aus Fruchtzubereitung (untere Phase Kirsch, obere Phase Banane, natürliche Farbstoffe, Aromastoffe) | | | |

Die beiden Phasen wurden wie nachfolgend dargestellt einzeln hergestellt:

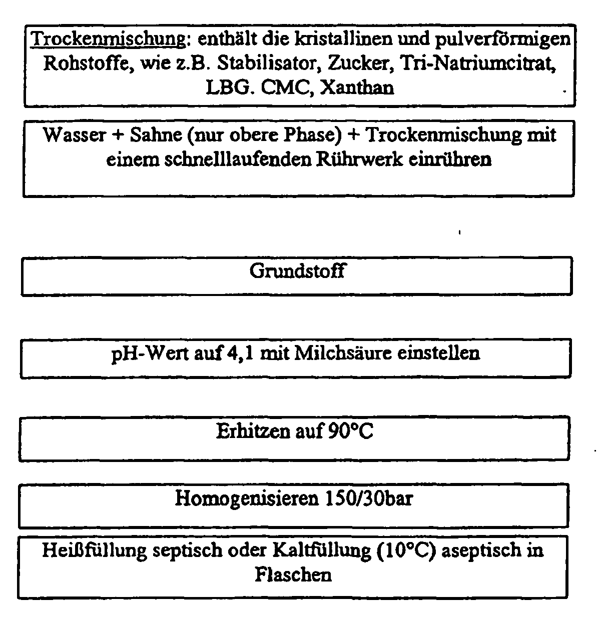

### Abfüllverfahren :

Die Abfüllung erfolgte über einen selbst hergestellten Trichter mit Füllkopf. Der Trichter hat ein Fassungsvolumen von 10 l. Das Gefäß läuft nach unten hin bis auf 15 mm konisch zusammen. Zwischen dem Trichter und dem Füllkopf befindet sich ein Kugelhahn-Ventil. Der Füllkopf ist abnehmbar und kann mittels einer Schraube am Auslauf des Trichter fixiert werden. Der Einlauf des Füllkopfes weist 15 mm Durchmesser auf, der Auslauf 30 mm Durchmesser, die Höhe ist 50 mm, der Aufbau ist kegelförmig. Am Ausgang des Füllkopfes ist ein Prallblech (35mm) angebracht. Das Blech ist so fixiert, dass das Produkt seitlich durch eine 2 mm Öffnung austreten kann. Mittels dieser Konstruktion kann das Produkt möglichst schonend über die Flaschenwand eingefüllt werden.

Zuerst wird die untere Phase und dann im zweiten Schritt die obere Phase in die Flasche gefüllt. Nach dem Füllvorgang ist an der Grenzschicht zunächst keine klare Trennung der beiden Phasen zu erkennen. Nach einer Standzeit, die 12 Stunden betragen kann, ist die Trennschicht zwischen den beiden Phasen deutlich erkennen.

### Variation des Dichteunterschieds

Es wurden, basierend auf der Abmischung der Standardrezeptur (siehe oben), bei konstanter Stabilisatormenge und Fettgehalt durch Erniedrigung des Anteils an Beschwerungsmittel (Ersatz durch Wasser) die Getränke V1 und V2 hergestellt:

| **Phase** | δ **in [kg/dm³]** | Δ δ **in [kg/dm³]** | **klare** **Phasentrennung** |
|---|---|---|---|
| Standard unten | 1,147 | 0,073 | ja |
| Standard oben | 1,074 | | |
| V1 unten | 1,104 | 0,053 | ja |
| V1 oben | 1,051 | | |
| V2 unten | 1,084 | 0,038 | nein |
| V2 oben | 1,046 | | |
| V1 = Versuch 1, δ = Dichte, Δ δ = Dichtedifferenz oben/unten | | | |

Die Versuchsreihe zeigt, wie weit man die Dichte absenken kann ohne das die Phasentrennung negativ beeinflusst wird. Es zeigt sich, dass erfindungsgemäß die Dichtedifferenz zwischen den beiden Phasen mindestens 0,02 kg/dm³ betragen muss, um eine klare Trennung zu gewährleisten.

Wenn die Dichte der unteren Phase < 1,094 kg/dm³ und die Dichte der obere Phase <1,05 kg/dm³ beträgt, dann wird auch bei Dichteunterschieden, die über 0,02 kg/dm³ liegen, eine klare Phasentrennung nicht immer erreicht. Es ist dann in einzelnen Ausführungsformen erforderlich, dass die Dichtdifferenz mindestens 0,03 kg/dm³ oder 0,04 kg/dm³ beträgt.

### Schütteltest

Eine 330ml gefüllte PET-Flasche wurde auf einem Schüttler (Gerhardt Bonn, Type R05, App.-Nr. 470859) fixiert und 1h lang bei der maximal möglichen Umdrehung (200 U/min) horizontal geschüttelt.

### Rührtest:

Um das Produkt einer höheren Scherung auszusetzen, wurde das 2-Phasen-Getränk einem mechanischen Rührvorgang mittels eines Propellerrührers unterzogen.

Das Rührwerkzeug wird in einen bohrfutterähnlichen Schaft eingespannt. Die Propellerachse misst eine Länge von 400 mm. Der Propeller besteht aus zwei Blechen die spiralförmig, gegenüberliegend am Ende der Achse über ein Scharnier, angebracht sind. Die beiden Bleche werden durch die erzeugte Fliehkraft mittels eines Elektromotors nach außen gerichtet und messen beide zusammen 57 mm.

Das Rührwerkzeug mit einem Durchmesser von 57 mm wurde in der unteren Phase ca. 40 mm vom Flaschenboden und 20 mm unter der Phasengrenze zentrisch platziert. Das Rührwerk (Janke & Kunkel, Ika Labortechnik RE-162; 10-1600U/min) kann stufenlos von 10-1600 U/min reguliert werden.

Beide Phasen wurden in einem Mischungsverhältnis von 1:1 ausgemischt. Die Flasche enthielt einen Kopfraum von 20 ml. Die Flasche hat einen Durchmesser von 60 mm, eine Höhe von 150 mm und ein Fassungsvolumen von 330 ml.

### Bedeutung der Stabilisierung:

Um die Stabilisierung zu definieren, wurden die beiden Phasen mit unterschiedlichen Stabilisatorkombinationen und -Konzentrationen getestet.

Die verschiedenen Phasen wurden getrennt hergestellt. Die Abfüllung des 2-Phasen-Getränkes wurde mittels einem Trichter mit Füllkopf (siehe Bild) simuliert. Es gibt keinen signifikanten Dichteunterschied zwischen den getesteten Varianten 1-6. Die durchgeführten Tests bezogen sich lediglich auf die Stabilität der Getränke bei unterschiedlich prozentualer Zusammensetzung der Hydrokolloide.

Es wurden ein Getränk gemäß der Standardabmischung und 5 weitere Getränke mit Variationen in der Stabilisatormenge der unteren und oberen Phase hergestellt. Die Erniedrigung der Stabilisatormenge wurde durch den Zusatz von Wasser ausgeglichen.

### 1.Standard Stabilisierung

Untermasse Xanthan 0,04%
Obermasse LBG 0,05%
CMC 0,35%

Die beiden Phasen sind deutlich getrennt.

Schütteltest: Nach einem Schütteltest waren beide Phasen noch deutlich voneinander getrennt, es konnte kein signifikanter Unterschied zum ungeschüttelten Muster festgestellt werden.

Rührtest: Bei 250 U/min konnte man eine erste Verschiebung der Grenzfläche von ca. 10 mm beobachten. Eine abgeschlossene Mischung der beiden Phasen, erlangte man bei 550 U/min. Danach war keine reversible Phasentrennung mehr möglich.

### 2. Gleiche Stabilisierung Ober- und Untermasse

2.1 Untermasse LBG gesamt : 0,1%
Obermasse LBG gesamt : 0,1%

Die beiden Phasen trennen sich nicht ausreichend.

2.2 Untermasse Xanthan gesamt: 0,08%
Obermasse Xanthan gesamt : 0,08%

Eine klare Phasentrennung ist nicht erkennbar.

### 3. Stabilisierung stark reduzieren

3.1 Untermasse Xanthan : 0,02%
Obermasse LBG : 0,02%

Die Obermasse ist nicht stabil und neigt zu Synärese

### 4. Ohne Stabilisierung

4.1 Untermasse Xanthan : 0,00%
Obermasse LBG : 0,00%

Eine deutliche Phasentrennung ist nicht erkennbar

### 5. Standardstabilisierung um 1/3 reduziert

Untermasse Xanthan 0,027%
Obermasse LBG 0,034%
CMC 0,235%

Schütteltest: Bei 200 U/min ist nach 5 min eine leichte Vermischung der Obermasse mit der Untermasse gegeben. Die Obermasse färbt sich leicht ins Hellrote, wobei immer noch eine deutliche Phasentrennung erkennbar ist.

### 6. Standardstabilisierung um 2/3 reduziert

Untermasse Xanthan 0,014%
Obermasse LBG 0,017%
CMC 0,119%

Schütteltest: Bei 200/min wird nach 1,5 min. eine vollständige Mischung beider Phasen beobachtet.

### Vergleich 5. mit 6.

Eine Reduzierung der Stabilisierung um 1/3 vom Standard, zeigte nach dem Schütteln eine leichte Vermischung der Phasen. Die Trennung der beiden Phasen ist noch deutlich zu erkennen. Eine weitere Absenkung der Viskosität führt zu einer stärkeren bis vollständigen Vermischung beider Phasen während des Schüttelvorganges. Die Stabilisierungsuntergrenze ist bei etwa 1/3 unter der Standardlösung anzusetzen.

## Patentansprüche

1. Zwei-Phasen-Getränk mit einer oberen und einer unteren Phase, wobei
■ die untere Phase mindestens ein Beschwerungsmittel enthält,
■ eine der Phasen Xanthan enthält
■ die andere Phase mindestens ein weiteres Hydrokolloid enthält und
■ die untere Phase eine mindestens 0,02 kg/dm³ höhere Dichte als die obere Phase aufweist.

2. Zwei-Phasen-Getränk nach Anspruch 1, **dadurch gekennzeichnet, dass** das Xanthan in der oberen Phase enthalten ist.

3. Zwei-Phasen-Getränk nach Anspruch 2, **dadurch gekennzeichnet, dass** die obere Phase zusätzlich Carboxy-Methyl-Cellulose enthält.

4. Zwei-Phasen-Getränk nach mindestens einem der Ansprüche 1 bis 3, **dadurch gekennzeichnet, dass** das weitere Hydrokolloid Carboxy-Methyl-Cellulose und/oder Locust Bean Gum ist.

5. Zwei-Phasen-Getränk nach mindestens einem der Ansprüche 1 bis 4, **dadurch gekennzeichnet, dass** das Beschwerungsmittel ausgewählt ist aus der Gruppe bestehend aus Glucosesirup, Maltodextrin, Saccharose, Dextrose, Fruktose und/oder lösliche Ballaststoffe.

6. Zwei-Phasen-Getränk nach mindestens einem der Ansprüche 1 bis 5, **dadurch gekennzeichnet, dass** in der unteren und/oder oberen Phase Zusatzstoffe enthalten sind.

7. Zwei-Phasen-Getränk nach mindestens einem der Ansprüche 1 bis 6, **dadurch gekennzeichnet, dass** als Zusatzstoffe Pektin, Tri-Natrium-Citrat, Grundstoffe, Geschmacksstoffe, Aromastoffe, Farbstoffe, Fruchtzubereitung, Emulgatoren, fetthaltige Substanzen, Milchprodukte, Milch, Joghurt, Molke und/oder Buttermilch enthalten sind.

8. Zwei-Phasen-Getränk nach Anspruch 7, **dadurch gekennzeichnet, dass** als fetthaltige Substanz Sahne und/oder tierische oder pflanzliche Fette enthalten sind.

9. Zwei-Phasen-Getränk nach mindestens einem der Ansprüche 1 bis 8, **dadurch gekennzeichnet dass** nach Schütteln für 1 h bei 200 U/min die Phasen sich nach 10 Minuten im wesentlichen separiert haben.

10. Verfahren zur Herstellung eines Zwei-Phasen-Getränks nach einem der Ansprüche 1 bis 9, **dadurch gekennzeichnet, dass**
■ eine obere Phase und eine untere Phase getrennt voneinander gemischt werden,
■ gegebenenfalls homogenisiert werden, und
■ zuerst die untere Phase eingefüllt wird und dann die obere Phase über den Flaschenrand zudosiert wird oder
■ zuerst die obere Phase eingefüllt wird und dann die untere Phase mittels eines Füllorgans untergelegt wird.

11. Verwendung einer unteren Phase und einer oberen Phase, wobei
■ die untere Phase mindestens ein Beschwerungsmittel enthält,
■ eine der Phasen Xanthan enthält
■ die andere Phase mindestens ein weiteres Hydrokolloid enthält und
■ die untere Phase eine mindestens 0,02 kg/dm³ höhere Dichte als die obere Phase aufweist
zur Herstellung eines Zwei-Phasen-Getränks nach einem der Ansprüche 1 bis 9.

## Claims

1. A two-phase beverage comprising upper and lower phases, wherein:
- said lower phase contains at least one weighting agent;
- either of the phases contains xanthan gum;
- the other phase contains at least one further hydrocolloid; and
- the lower phase has a density which is by at least 0.02 kg/dm³ higher than that of the upper phase.

2. The two-phase beverage according to claim 1, **characterized in that** said xanthan gum is contained in the upper phase.

3. The two-phase beverage according to claim 2, **characterized in that** said upper phase additionally contains carboxymethylcellulose.

4. The two-phase beverage according to at least one of claims 1 to 3, **characterized in that** said further hydrocolloid is carboxymethylcellulose and/or locust bean gum.

5. The two-phase beverage according to at least one of claims 1 to 4, **characterized in that** said weighting agent is selected from the group consisting of glucose syrup, maltodextrin, saccharose, dextrose, fructose and/or soluble roughage.

6. The two-phase beverage according to at least one of claims 1 to 5, **characterized in that** additives are contained in said lower and/or upper phases.

7. The two-phase beverage according to at least one of claims 1 to 6, **characterized in that** pectin, trisodium citrate, bases, flavors, flavoring agents, colorants, fruit preparation, emulsifiers, fat-containing substances, dairy products, milk, yoghurt, whey and/or butter milk are contained as said additives.

8. The two-phase beverage according to claim 7, **characterized in that** cream and/or animal or vegetable fats are contained as said fat-containing substance.

9. The two-phase beverage according to at least one of claims 1 to 8, **characterized in that** the phases will have essentially separated within 10 minutes after having been shaken at 200 rpm for 1 hour.

10. A process for preparing a two-phase beverage according to any of claims 1 to 9, **characterized in that**:
- an upper phase and a lower phase are mixed separately;
- optionally homogenized; and
- the lower phase is filled in first, followed by metering in the upper phase over the bottle edge; or
- the upper phase is filled in first, followed by adding the lower phase under the upper phase by means of a filling head.

11. Use of a lower phase and an upper phase in which:
- said lower phase contains at least one weighting agent;
- one of the phases contains xanthan gum;
- the other phase contains at least one further hydrocolloid; and
- the lower phase has a density which is by at least 0.02 kg/dm³ higher than that of the upper phase;
for preparing a two-phase beverage according to any of claims 1 to 9.

## Revendications

1. Boisson diphasique comportant une phase supérieure et une phase inférieure, dans laquelle
- la phase inférieure contient au moins un agent densifiant,
- l'une des phases contient du xanthane,
- l'autre phase contient au moins un autre hydrocolloïde et
- la phase inférieure a une densité supérieure à la phase supérieure d'au moins 0,02 kg/dm³.

2. Boisson diphasique selon la revendication 1, **caractérisée en ce que** le xanthane est contenu dans la phase supérieure.

3. Boisson diphasique selon la revendication 2, **caractérisée en ce que** la phase supérieure contient en plus du carboxy-méthyl-cellulose.

4. Boisson diphasique selon au moins l'une des revendications 1 à 3, **caractérisée en ce que** l'autre hydrocolloïde est du carboxy-méthyl-cellulose et/ou Locust Bean Gum.

5. Boisson diphasique selon au moins l'une des revendications 1 à 4, **caractérisée en ce que** l'agent densifiant est choisi dans le groupe constitué par le sirop de glucose, la maltodextrine, le saccharose, le dextrose, le fructose et/ou des substances de remplissage solubles.

6. Boisson diphasique selon au moins l'une des revendications 1 à 5, **caractérisée en ce que** des substances additionnelles sont contenues dans la phase inférieure et/ou la phase supérieure.

7. Boisson diphasique selon au moins l'une des revendications 1 à 6, **caractérisée en ce que** les substances additionnelles contenues sont la pectine, le citrate trisodique, des substances de base, des exhausteurs de goût, des arômes, des colorants, des extraits de fruit, des émulsifiants, des substances grasses, des produits laitiers, du lait, du yaourt, du petit-lait et/ou du babeurre.

8. Boisson diphasique selon la revendication 7, **caractérisée en ce que** la substance grasse est de la crème et/ou des graisses animales ou végétales.

9. Boisson diphasique selon au moins l'une des revendications 1 à 8, **caractérisée en ce que** les phases ont été sensiblement séparées au bout de 10 minutes après agitation pendant une heure à 200 tours par minute.

10. Procédé de fabrication d'une boisson diphasique selon l'une des revendications 1 à 9, **caractérisé en ce que**
- une phase supérieure et une phase inférieure sont mélangées en étant séparées l'une de l'autre,
- sont éventuellement homogénéisées, et
- on introduit tout d'abord la phase inférieure puis on ajoute de façon dosée la phase supérieure par le bord de la bouteille ou
- on introduit tout d'abord la phase supérieure puis on place la phase en dessous au moyen d'un organe de remplissage.

11. Utilisation d'une phase inférieure et d'une phase supérieure, dans laquelle
- la phase inférieure contient au moins un agent densifiant,
- l'une des phases contient du xanthane,
- l'autre phase contient au moins un autre hydrocolloïde et
- la phase inférieure a une densité supérieure à la phase supérieure d'au moins 0,02 kg/dm³,
dans la fabrication d'une boisson diphasique selon l'une des revendications 1 à 9.
